Europäisches Patentamt

(19) European Patent Office

Office européen des brevets

(11) Numéro de publication: **0 252 834**
**B1**

(12) **FASCICULE DE BREVET EUROPEEN**

(45) Date de publication du fascicule du brevet:
06.06.90

(21) Numéro de dépôt: 87401581.1

(22) Date de dépôt: **06.07.87**

(51) Int. Cl.⁵: **B60R 22/34**

(54) **Dispositif de fixation d'une sangle, notamment de ceinture de sécurité sur une bobine d'enrouleur.**

(30) Priorité: **08.07.86 FR 8609904**

(43) Date de publication de la demande:
**13.01.88 Bulletin 88/2**

(45) Mention de la délivrance du brevet:
**06.06.90 Bulletin 90/23**

(84) Etats contractants désignés:
**DE ES GB IT**

(56) Documents cités:
**EP-A- 0 048 809**
**DE-A- 2 556 409**
**FR-A- 2 331 942**
**FR-A- 2 433 666**

(73) Titulaire: **ECIA - EQUIPEMENTS ET COMPOSANTS
POUR L'INDUSTRIE AUTOMOBILE, F-25400 Audincourt
(Doubs)(FR)**

(72) Inventeur: **Baliet, Jean-Noel, 3 rue des Carrières,
F-70800 Allievilliers(FR)**

(74) Mandataire: **Polus, Camille et al, c/o Cabinet
Lavoix 2, Place d'Estienne d'Orves, F-75441 Paris
Cedex 09(FR)**

## Description

La présente invention concerne un dispositif de fixation d'une sangle notamment de ceinture de sécurité sur une bobine d'enrouleur et un procédé de fixation d'une sangle de ceinture de sécurité, sur une bobine.

On connait dans l'état de la technique un certain nombre de dispositifs de fixation d'une telle sangle sur une bobine d'enrouleur, dans lesquels la bobine comporte un logement de réception d'un organe de fixation de la sangle sur la bobine et une fente ménagée dans le prolongement du logement, pour le passage de la sangle. Dans ces dispositifs, une portion d'extrémité de la sangle passe autour de l'organe de fixation et est cousue sur une autre portion de la sangle pour assurer la fixation de la sangle sur la bobine d'enrouleur.

Cependant, cette couture présente un certain nombre d'inconvénients, notamment en raison du temps nécessaire à sa réalisation et des équipements à mettre en oeuvre.

Selon une autre technique enseignée par le document DE 2 556 409, on ne fait pas appel à une couture. D'après ce document, on utilise toujours une bobine à logement et fente mais on lui associe un organe de fixation de la sangle qui se présente à la manière d'un cavalier en U fermé conçu d'une manière telle que seule une partie, très courte, de l'extrémité libre de la sangle y est insérée sans pouvoir traverser le cavalier ni l'enveloppe totalement.

Cette technique d'insertion partielle en bout n'est pas sûre et est délicate de mise en oeuvre.

Le but de l'invention est donc de résoudre les problèmes évoqués ci-dessus.

L'invention a pour objet un dispositif pour la fixation d'une sangle sur une bobine d'enrouleur du type de celui exposé dans le préambule de la revendication 1 et dont les particularités ressortent notamment de sa partie caractérisante.

L'invention à aussi pour objet un procédé pour la fixation d'une sangle sur une bobine d'enrouleur du type de celui exposé dans le préambule de la revendication 10 et dont les particularités ressortent notamment de sa partie caractérisante.

L'invention sera mieux comprise à l'aide de la description qui va suivre, donnée uniquement à titre d'exemple et faite en se référant aux dessins annexés, sur lesquels:

- la Fig.1 représente une vue en coupe d'une bobine d'enrouleur de l'état de la technique;
- la Fig.2 représente une vue en coupe d'une bobine d'enrouleur comportant un dispositif de fixation selon l'invention;
- la Fig.3 représente un premier mode de réalisation d'un organe de fixation entrant dans la constitution d'un dispositif selon l'invention;
- la Fig.4 représente un second mode de réalisation d'un organe de fixation entrant dans la constitution d'un dispositif selon l'invention; et
- les Fig.5a à 5h illustrent les différentes étapes d'un procédé de fixation d'une sangle sur une bobine d'enrouleur entrant dans la constitution d'un dispositif selon l'invention.

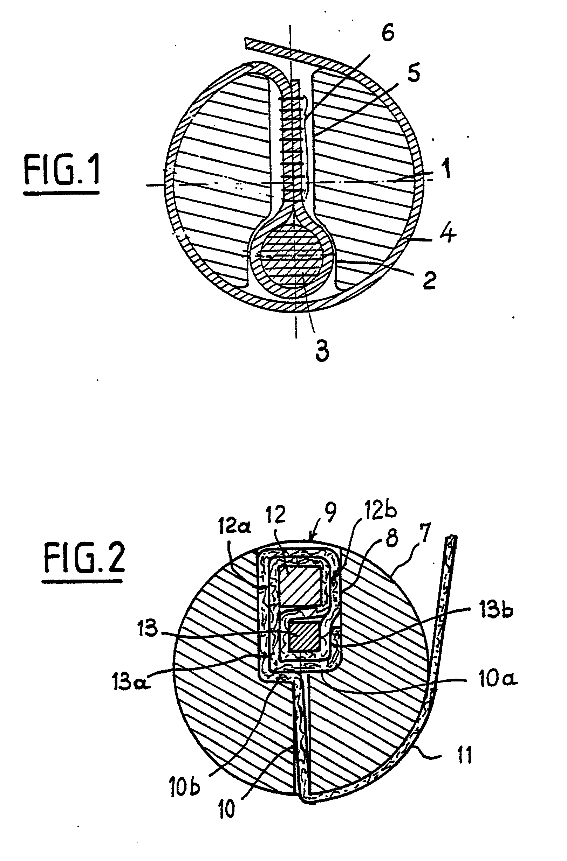

Ainsi qu'on peut le voir sur la Fig.1, les dispositifs de fixation de l'état de la technique, comportent une bobine 1 dans laquelle est ménagé un logement 2 de réception d'un organe de fixation 3 d'une sangle 4 sur la bobine. Cet organe de fixation est constitué par une tige cylindrique disposée dans le logement de réception 2 dans le prolongement d'une fente 5 prévue pour le passage de la sangle 4.

Une portion d'extrémité de la sangle 4 passe autour de l'organe de fixation 3 et est cousue dans la zone 6 sur une autre portion de la sangle de manière à fixer celle-ci sur la bobine.

Ainsi qu'il a été mentionné précédemment, ces dispositifs de fixation présentent un certain nombre d'inconvénients.

Le dispositif selon l'invention, représenté sur la Fig.2, comporte également une bobine d'enrouleur 7 dans laquelle sont prévus un logement 8 de réception d'un organe de fixation 9, et une fente 10 pour le passage d'une sangle 11. Cette fente 10 est ménagée dans le prolongement du logement 8.

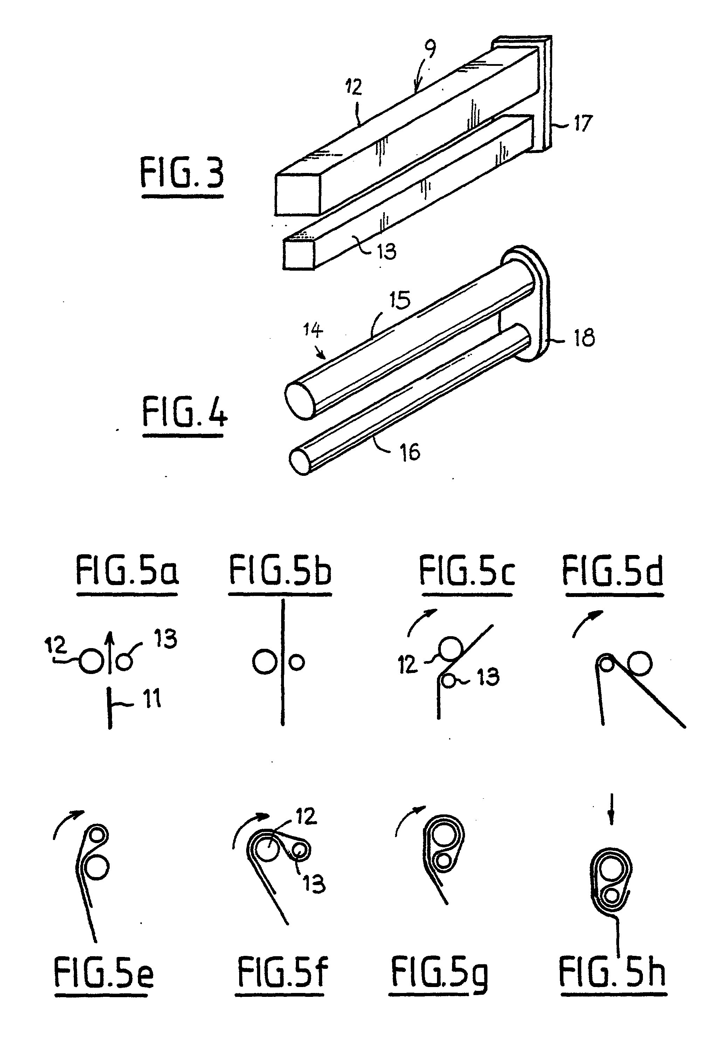

Ainsi qu'on peut le voir sur cette Fig.2 et plus clairement sur la Fig.3, l'organe de fixation 9 comporte deux tiges 12 et 13 à peu près parallèles, solidaires l'une de l'autre et écartées d'une distance au moins égale à l'épaisseur de la sangle. L'une des extrémités de la sangle passe donc autour et entre ces tiges, de sorte que cet organe de fixation et l'extrémité correspondante de la sangle sont bloqués par coincement dans le logement 8.

Les tiges présentent des sections de dimensions différentes.

Dans le mode de réalisation représenté sur la Fig.3, ces tiges présentent une section carrée. Dans le mode de réalisation représenté sur la Fig.4, l'organe de fixation 14 présente deux tiges cylindriques 15 et 16.

Dans les deux modes de réalisation, les tiges sont fixées par au moins l'une de leurs extrémités sur une platine de support 17 ou 18 respectivement.

La tige de plus petite section est avantageusement disposée à proximité de la fente de la bobine.

Par ailleurs, et quel que soit le sens d'enroulement de la sangle que l'on prenne, celle-ci passe successivement autour des deux tiges 12 et 13, entre ces deux tiges, puis autour des deux tiges, entre les surfaces en regard des tiges et du logement de réception 8.

La distance entre les rebords du logement 8 de la bobine et les surfaces en regard de la tige de plus grande section 12 est à peu près égale à deux fois l'épaisseur de la sangle de même qu'entre l'un des rebords du logement et l'une des surfaces en regard de la tige de plus petite section 13. Par contre, la distance entre l'autre rebord du logement 8 et l'autre surface en regard de la tige de plus petite section 13 est à peu près égale à 3 fois l'épaisseur de la sangle. Les intervalles 12a, 12b et 13b ont donc une largeur à peu près égale à deux fois l'épaisseur de la sangle, tandis que l'intervalle 13b a une largeur à peu près égale à trois fois l'épaisseur de cette sangle. Ces intervalles sont donc déterminés par les rebords du logement 8 et les surfaces en regard des tiges 12 et 13 qui peuvent être constituées par des surfaces planes comme c'est le cas pour le mode de réalisation représenté sur cette Fig.2 ou par des arêtes de celles-ci dans le cas où d'autres sections de tiges sont utilisées.

Par ailleurs, la distance entre l'un, 10a, des rebords de la fente 10 et la surface en regard de la tige 13 de plus petite section, est à peu près égale à deux fois l'épaisseur de la sangle tandis que la distance entre l'autre rebord 10b de la fente 10 et la partie en regard de la tige est à peu près égale à trois fois l'épaisseur de cette sangle. Cet enroulement permet de bloquer la sangle de manière fiable dans le logement de la bobine.

Si l'on se reporte maintenant aux Fig.5a à 5h qui représentent les différentes étapes d'un procédé de fixation d'une sangle de ceinture de sécurité sur une bobine d'enrouleur telle que décrite précédemment, on constate que la première phase de ce procédé consiste à introduire l'extrémité correspondante de la sangle 11 entre les tiges 12 et 13 de l'organe de blocage, on fait ensuite effectuer à celui-ci une rotation sur lui-même de 450° dans le sens horaire, de manière que la sangle passe deux fois autour des tiges et une fois entre elles, puis on introduit l'autre extrémité de la sangle dans la fente de la bobine et l'organe de blocage, sur lequel a été enroulée l'extrémité correspondante de la sangle, dans le logement de la bobine, avec la tige de plus petite section dirigée vers la fente de cette bobine, comme cela a été décrit précédemment, de manière à assurer le blocage de celle-ci par coincement dans le logement.

La longueur de sangle enroulée autour de l'organe de blocage est telle qu'à la fin de l'enroulement, l'extrémité libre de la sangle se trouve bloquée, ainsi qu'on peut le voir sur la Fig.2, dans l'intervalle 13b entre l'un des rebords du logement 8 et la surface en regard de la tige 13 de plus petite section, dont la largeur est à peu près égale à deux fois l'épaisseur de la sangle comme cela a été mentionné précédemment.

Enfin, les tiges peuvent présenter des sections autres que celles décrites précédemment et elles peuvent être réalisées en matériau moulable, métallique ou plastique.

## Revendications

1. Dispositif de fixation d'une sangle (11) sur une bobine d'enrouleur (7) notamment pour une ceinture de sécurité, dans lequel la bobine (7) comporte un logement (8) de réception d'un organe de fixation (9; 14) de la sangle sur la bobine et une fente (10) ménagée dans le prolongement du logement, pour le passage de la sangle (11) et dans lequel l'organe de fixation est destiné à recevoir une des extrémités de la sangle, caractérisé en ce que ledit organe de fixation comporte deux tiges (12; 13; 15, 16) à peu près parallèles, solidaires l'une de l'autre et écartées d'une distance au moins égale à l'épaisseur de la sangle, autour et entre lesquelles passe l'une des extrémités de la sangle (11), cet organe (9; 14) et l'extrémité correspondante de la sangle étant ainsi bloqués par coincement dans ledit logement.

2. Dispositif selon la revendication 1, caractérisé en ce que la sangle passe successivement autour des deux tiges (12, 13; 15, 16) entre les deux tiges, puis autour des deux tiges, entre les surfaces en regard des tiges (12, 13; 15, 16) et du logement (8).

3. Dispositif selon la revendication 1 ou 2, caractérisé en ce que les deux tiges présentent des sections de dimensions différentes.

4. Dispositif selon la revendication 3, caractérisé en ce que la tige de plus petite section (13; 16) est disposée à proximité de la fente (10) de la bobine.

5. Dispositif selon la revendication 4, caractérisé en ce que la distance entre les rebords du logement (8) de la bobine (7) et les surfaces en regard de la tige (12; 15) de plus grande section est à peu près égale à deux fois l'épaisseur de la sangle (11) de même qu'entre l'un des rebords du logement (8) et l'une des surfaces en regard de la tige (13; 16) de plus petite section, tandis que la distance entre l'autre rebord du logement (8) et l'autre surface en regard de la tige de plus petite section (13) est à peu près égale à trois fois l'épaisseur de la sangle (11).

6. Dispositif selon la revendication 4 ou 5, caractérisé en ce que la distance entre l'un (10a) des rebords de la sangle (10) et la surface en regard de la tige (13; 16) de plus petite section est à peu près égale à deux fois l'épaisseur de la sangle, tandis que la distance entre l'autre rebord (10b) de la fente et la partie en regard de ladite tige est à peu près égale à trois fois l'épaisseur de cette sangle.

7. Dispositif selon l'une quelconque des revendications précédentes, caractérisé en ce que les tiges (15, 16) sont cylindriques.

8. Dispositif selon l'une quelconque des revendications 1 à 6, caractérisé en ce que les tiges (12, 13) présentent une section carrée.

9. Dispositif selon l'une quelconque des revendications précédentes, caractérisé en ce que les tiges (12, 13; 15, 16) sont fixées par au moins l'une de leurs extrémités sur une platine de support (17; 18).

10. Procédé de fixation d'une sangle (11) de ceinture de sécurité sur une bobine (7) d'enrouleur telle que définie dans l'une quelconque des revendications précédentes, caractérisé en ce qu'on introduit l'extrémité correspondante de la sangle (11) entre les deux tiges (12, 13; 15, 16) solidaires de l'organe de blocage (9; 14), on fait effectuer à celui-ci une rotation sur lui-même de 450° dans le sens horaire, et on introduit l'autre extrémité de la sangle dans la fente (10) de la bobine (7) et l'organe de blocage (9; 14) sur lequel a été enroulée à l'extrémité correspondante de la sangle, dans le logement (8) de la bobine, de manière à assurer son blocage par coincement dans le logement.

11. Procédé selon la revendication 10, caractérisé en ce que la longueur de sangle (11) enroulée autour de l'organe de blocage (9; 14) est telle qu'à la fin de l'enroulement, l'extrémité libre de la sangle (11) se trouve bloquée dans l'intervalle (13b) entre le rebord du logement (8) et la surface en regard de la tige (13; 16) de plus petite section dont la largeur est à peu près égale à deux fois l'épaisseur de la sangle (11).

## Patentansprüche

1. Vorrichtung zur Befestigung eines Gurtes (11) auf einer Aufwickelspule (7), insbesondere für einen Sicherheitsgurt, bei der die Spule (7) eine Aufnahme (8) zur Aufnahme eines Befestigungsorgans (9; 14) des Gurtes auf der Spule, und einen Spalt (10) aufweist, der in der Verlängerung der Aufnahme für den Hindurchtritt des Gurtes (11) ausgebildet ist, und in dem das Befestigungsorgan dazu bestimmt ist, eines der Enden des Gurtes aufzunehmen, dadurch gekennzeichnet, daß das Befestigungsorgan zwei ungefähr parallele Stäbe (12; 13; 15, 16) aufweist, die miteinander verbunden sind und durch einen Abstand voneinander beabstandet sind, der wenigstens gleich der Dicke des Gurtes ist, um die und zwischen denen eines der Enden des Gurtes (11) verläuft, wobei dieses Organ (9; 14) und das entsprechende Ende des Gurtes so durch Einklemmen in die Aufnahme blockiert sind.

2. Vorrichtung nach Anspruch 1, dadurch gekennzeichnet, daß der Gurt nacheinander um die beiden Stäbe (12, 13; 15, 16) zwischen den beiden Stäben, sodann um die beiden Stäbe, zwischen den einander gegenüberliegenden Flächen der Stäbe (12, 13; 15, 16) und der Aufnahme (8) verläuft.

3. Vorrichtung nach Anspruch 1 oder 2, dadurch gekennzeichnet, daß die beiden Stäbe Querschnitte unterschiedlicher Abmessungen aufweisen.

4. Vorrichtung nach Anspruch 3, dadurch gekennzeichnet, daß der Stab von kleinstem Querschnitt (13; 16) in der Nähe des Spaltes (10) der Spule angeordnet ist.

5. Vorrichtung nach Anspruch 4, dadurch gekennzeichnet, daß der Abstand zwischen den Rändern der Aufnahme (8) der Spule (7) und den Flächen, die dem Stab (12; 15) von größtem Querschnitt gegenüberliegen, ungefähr gleich dem zweifachen der Dicke des Gurtes (11) ist, gleichermaßen wie zwischen einem der Ränder der Aufnahme (8) und einer der Flächen gegenüber dem Stab (13; 16) von kleinstem Querschnitt, während der Abstand zwischen dem anderen Rand der Aufnahme (8) und der anderen Fläche gegenüber dem Stab von kleinstem Querschnitt (13) ungefähr gleich dem dreifachen der Dicke des Gurtes (11) ist.

6. Vorrichtung nach Anspruch 4 oder 5, dadurch gekennzeichnet, daß der Abstand zwischen einem (10a) der Ränder des Spaltes (10) und der Fläche gegenüber dem Stab (13; 16) von geringstem Querschnitt ungefähr gleich dem zweifachen der Dicke des Gurtes ist, während der Abstand zwischen dem anderen Rand (10b) des Spaltes und dem Bereich gegenüber dem genannten Stab ungefähr gleich dem dreifachen der Dicke dieses Gurtes ist.

7. Vorrichtung nach einem der vorhergehenden Ansprüche, dadurch gekennzeichnet, daß die Stäbe (15, 16) zylindrisch sind.

8. Vorrichtung nach einem der Ansprüche 1 bis 6, dadurch gekennzeichnet, daß die Stäbe (12, 13) einen viereckigen Querschnitt aufweisen.

9. Vorrichtung nach einem der vorhergehenden Ansprüche, dadurch gekennzeichnet, daß die Stäbe (12, 13; 15, 16) durch wenigstens eines ihrer Enden auf einer Stützplatte (17; 18) befestigt sind.

10. Verfahren zur Befestigung eines Gurtes (11) eines Sicherheitsgurtes auf einer Aufwickelspule (7), wie in einem der vorhergehenden Ansprüche definiert, dadurch gekennzeichnet, daß das entsprechende Ende des Gurtes (11) zwischen die beiden Stäbe (12, 13; 15, 16), die mit dem Blockierungsorgan (9; 14) verbunden sind, eingeführt wird, diesem eine Drehung um sich selbst von 450° im Uhrzeigersinn verleiht wird und das andere Ende des Gurtes in den Spalt (10) der Spule (7) und dem Blockierungsorgan (9; 14) eingeführt wird, auf das das entsprechende Ende des Gurtes aufgewickelt wurde, in die Aufnahme (8) der Spule, derart, daß seine Blockierung durch Einklemmen in die Aufnahme sichergestellt wird.

11. Verfahren nach Anspruch 10, dadurch gekennzeichnet, daß die Länge des Gurtes (11), der um das Blockierungsorgan (9; 14) gewickelt ist, derart ist, daß am Ende des Aufwickelns, das freie Ende des Gurtes (11) im Zwischenraum (13b) zwischen dem Rand der Aufnahme (8) und der Fläche gegenüber dem Stab (13; 16) von geringstem Querschnitt blockiert ist, von dem die Breite ungefähr gleich dem zweifachen der Dicke des Gurtes (11) ist.

**Claims**

1. Device for attaching a belt (11) to a winding reel (7), especially for a safety belt, wherein the reel (7) comprises a recess (8) for accommodating a member (9; 14) for attaching the belt to the reel and a slot (10) forming an extension of the recess, for the belt (11) to pass through, and wherein the attaching member is adapted to receive one end of the belt, characterised in that said attaching member comprises two substantially parallel rods (12; 13; 15, 16) integral with each other and spaced apart by a distance at least equal to the thickness of the belt, one end of said belt (11) passing around and between said rods, the attaching member (9; 14) and the corresponding end of the belt thus being jammed firmly in said recess.

2. Device according to claim 1, characterised in that the belt passes successively around the two rods (12, 13; 15, 16), between the two rods, then around the two rods, between the opposing surfaces of the rods (12, 13; 15, 16) and the recess (8).

3. Device according to claim 1 or 2, characterised in that the two rods have cross sections of different dimensions.

4. Device according to claim 3, characterised in that the rod with the smaller cross section (13; 16) is arranged close to the slot(10) in the reel.

5. Device according to claim 4, characterised in that the spacing between the edges of the recess (8) of the reel (7) and the opposing surfaces of the rod (12; 15) of larger cross section is substantially equal to twice the thickness of the belt (11) and also between one of the edges of the recess (8) and one of the opposing surfaces of the rod (13; 16) of smaller cross section, whilst the spacing between the other edge of the recess (8) and the other opposing surface of the rod of smaller cross section (13) is substantially equal to three times the thickness of the belt (11).

6. Device according to claim 4 or 5, characterised in that the spacing between one (10a) of the edges of the belt (10) and the opposing surface of the rod (13; 16) of smaller cross section is substantially equal to twice the thickness of the belt, whilst the spacing between the other edge (10b) of the slot and the opposing part of said rod is substantially equal to three times the thickness of this belt.

7. Device according to any one of the preceding claims, characterised in that the rods (15, 16) are cylindrical.

8. Device according to any one of claims 1 to 6, characterised in that the rods (12, 13) have a square cross section.

9. Device according to any one of the preceding claims, characterised in that the rods (12, 13; 15, 16) are fixed by at least one of their ends to a support plate (17; 18).

10. Method of attaching a belt (11) of a safety harness to a winding reel (7) as defined in any one of the preceding claims, characterised in that the corresponding end of the belt (11) is inserted between the two rods (12, 13; 15, 16) integral with the attaching member (9; 14), the latter is rotated on itself through an angle of 450° in the clockwise direction, and the other end of the belt is inserted in the slot (10) of the reel (7) and the attaching member (9; 14) onto which the corresponding end of the belt has been wound is inserted into the recess (8) in the reel, in order to jam it firmly into place in the recess.

11. Method according to claim 10, characterised in that the length of belt (11) wound around the attaching member (9; 14) is such that, at the end of the winding operation, the free end of the belt (11) is trapped in the gap (13b) between the edge of the recess (8) and the opposing surface of the rod (13; 16) of smaller cross section, the width of which is substantially equal to twice the thickness of the belt (11).

FIG.1

FIG.2

EP 0 252 834 B1

FIG.3

FIG.4

FIG.5a  FIG.5b  FIG.5c  FIG.5d

FIG.5e  FIG.5f  FIG.5g  FIG.5h